# EUROPÄISCHE PATENTSCHRIFT

(11) **EP 0 578 925 B1**
(45) Veröffentlichungstag und Bekanntmachung des Hinweises auf die Patenterteilung: **12.08.1998**
(21) Anmeldenummer: 93106083.4
(22) Anmeldetag: 14.04.1993
(51) Int. Cl.: B09B 3/00, A62D 3/00

(54) **Verfahren zur Beseitigung von Schadstoffen, insbesondere im Erdbodenbereich**
Method for the removal of contaminants, in particular from soil
Procédé pour l'élimination des polluants, en particulier de sol

(30) Priorität: 17.07.1992 DE 4223666; 19.01.1993 DE 4301270
(43) Veröffentlichungstag der Anmeldung: 19.01.1994
(73) Patentinhaber: Döring, Falk, Dr., 70469 Stuttgart (DE)
(72) Erfinder: Döring, Falk R., Dr., D-70469 Stuttgart (DE); Döring, Niels, D-70469 Stuttgart (DE)
(74) Vertreter: von Puttkamer, Nikolaus, Dipl.-Ing. Patentanwälte Haft, von Puttkamer Berngruber, Czybulka

(56) Entgegenhaltungen:
- EP-A- 0 312 174
- EP-A- 0 403 895
- DE-A- 3 929 634
- US-A- 4 957 393
- US-A- 4 988 427
- US-A- 5 074 986
- REPRINT FROM: LAND + WATER-NU / MILIEUTECHNIEK Nr. 5, Mai 1988, OISTERWIJK NL LAGEMAN ET AL: 'Elektro-reclamatie, een nieuwe techniek voor in- situ reiniging'

## Beschreibung

Die Erfindung betrifft ein Verfahren zur Beseitigung von Schadstoffen, insbesondere im Erdbodenbereich nach dem Oberbegriff des Patentanspruches 1.

Aus der DE-PS 39 20 342 geht ein Verfahren zum Dekontaminieren eines schadstoffbelasteten Erdbodenbereiches hervor, bei dem ein belastender, elektrokinetisch transportierbarer Schadstoff, der in einem eine elektrisch leitende Flüssigkeit enthaltenden Erdbodenbereich enthalten ist, elektrophoretisch an wenigstens einer vorbestimmten Stelle des Erdbodenbereiches gesammelt wird. Hierzu wird in den Erdbodenbereich ein Brunnen abgetäuft, dessen Brunnenrohre sich durch den Grundwasserleiter erstreckt. An diesem Brunnen wird ein Unterdruck angelegt, über den die im Boden enthaltenen Bodengase mit dem darin enthaltenen Schadstoff abgesaugt werden. In der Mitte des Brunnens ist eine lanzenförmige zentrale Kathode angeordnet, die sich sowohl durch den Grundwasserleiter als auch durch den ungesättigten Bodenbereich erstreckt. In einiger Entfernung vom Brunnen, beispielsweise in einem Abstand von etwa 6 m, sind in dem Erdboden mehrere lanzenförmige Anoden angeordnet. Durch Anlegen einer Spannung zwischen den Anoden und der zentralen Kathode wird im Grundwasserleiter und im darüberliegenden ungesättigten Bodenbereich ein radial auf die Kathode gerichtetes elektrisches Feld erzeugt, in dessen Richtung der durch die angelegte Spannung bewirkte elektrische Strom im Grundwasserleiter und in dem darüber befindlichen ungesättigten Bereich durch thermische Ionisation Schadstoffionen zum Brunnen wandern läßt. Das bekannte Verfahren wird ausschließlich im Zusammenhang mit elektrokinetisch transportierbaren Schadstoffen verwendet.

Aus der US-A-4 957 393 geht ein Verfahren der eingangs genannten Art hervor, bei dem zur Beseitigung von Schadstoffen vor Ort an im Erdbodenbereich angeordnete Elektroden eine elektrische Spannung einer solchen Größe angelegt wird, daß der Boden getrocknet wird und anschließend durch Erhitzen mittels elektrischer Entladungen vorhandene Schadstoffe verdampft werden.

Die Aufgabe der vorliegenden Erfindung besteht darin, ein Verfahren zur elektrochemischen Beseitigung von Schadstoffen, insbesondere im Erdbodenbereich, zu schaffen, mit dessen Hilfe Schadstoffe, insbesondere im Erdbodenbereich ohne räumliche Verlagerung an Ort und Stelle beseitigt bzw. zerlegt werden können.

Diese Aufgabe wird durch ein Verfahren mit den Merkmalen des Patentanspruches 1 gelöst.

Der wesentliche Vorteil besteht darin, daß nach der Erfindung erstmals auch Schadstoffe im Erdbodenbereich ohne räumliche Verlagerung an Ort und Stelle zerstört werden können, die nicht elektrophoretisch transportierbar sind oder für die das Grundwasser als Transportmedium nicht zur Verfügung steht, da der Boden nicht wassergesättigt ist (Non-Aquiferbereich). Somit ist durch die vorliegende Erfindung die Beseitigung nahezu aller organischer Substanzen und ihre Umwandlung im wesentlichen in das unschädliche Kohlenstoffdioxid und Wasser möglich, und zwar aller organischen Verbindungen, die durch Oxidation zerlegt werden können, darunter u.a. auch jener polarer Verbindungen, die bei Anwendung des erfindungsgemäßen Verfahrens zunächst unpolar werden, wie z.B. Phenole, die nach Abspaltung der OH-Gruppe zu Benzolen umgewandelt werden, und unpolarer organischer Verbindungen. Die Erfindung erfaßt organische Schadstoffe sowohl in fester, flüssiger als auch gasförmiger Form, wobei z.B. langkettige Verbindungen zunächst aufgebrochen und schrittweise in immer kurzkettigere Verbindungen, bis hin zur Oxidationsstufe (Kohlenstoffdioxid) überführt werden. So wird beispielsweise Heptacosan (C₂₇H₅₆) oder Spinacan (Triacontan; C₃₀H₆₂) in mehreren Abbaustufen zu z.B. Oktan, Propan und Butan abgebaut und schließlich bei bestimmungsgemäßer Anwendung der Erfindung zu Kohlenstoffdioxid oxidiert. Bei komplizierter aufgebauten organischen Verbindungen, wie z.B. Salicylsäure werden zunächst die Radikale (OH und HCO₂-Gruppen) abgespalten und anschließend der Benzolkern durch elektrochemische Oxidation zu Kohlenstoffdioxid umgewandelt. Polycyclische Verbindungen, wie z.B. Anthracen werden zunächst in einzelne Benzolringe zerlegt, die ebenfalls der elektrochemischen Oxidation zugeführt werden. Bei diesen Prozessen findet im Unterschied zur Elektrophorese keine Bewegung der Schadstoffe im Boden statt. Mit anderen Worten findet die Zerlegung und Oxidation der Schadstoffe unmittelbar dort statt, wo die Schadstoffe lagern. Ähnliche Vorgänge finden bei bestimmungsgemäßer Anwendung der Erfindung bei organischen, nicht ionisierbaren Stoffen statt. So wird z.B. der Molekülverband des nicht wasserlöslichen Quecksilbersulfids (HgS) bei bestimmungsgemäßer Anwendung des Verfahrens zu Quecksilber und elementarem Schwefel aufgebrochen. Damit werden die nunmehr getrennten chemischen Elemente elektrokinetisch transportierbar, z.T. in kolloidaler Form. Von Vorteil ist es auch, daß das vorliegende Verfahren praktisch nicht im Hinblick auf die Arbeitstiefen begrenzt ist, so sind z.B. Sanierungen nach dem vorliegenden Verfahren bis zu 106 m Tiefe geplant. Nach der Erfindung können vorteilhafterweise auch Bodenaushübe, Schlämme und andere Abfallstoffe gereinigt werden, die in Behältern jeglicher Art zum Beispiel im Boden-, Stahl-, Kunststoff- oder Betonbecken, enthalten sind.

Vorteilhafte Ausgestaltungen der Erfindung gehen aus den Unteransprüchen hervor.

Zu der Erfindung führten die folgenden Schritte. Erstmals wurde in Feldversuchen erkannt, daß die Schadstoffe, die im Erdboden- und/oder Grundwasserbereich vorhanden sind bzw. als kontaminierter Bodenaushub, belastete Schlämme o.ä. in Behältern, Gefäßen oder Becken gelagert sind und bei denen das Elektrophoreseverfahren nicht angewendet werden kann, beseitigt werden können, wenn ein elektrisches Feld (vorzugsweise Gleichstrom, aber auch Wechselstrom, frequenzmodulierter Wechselstrom oder pulsierender Strom, jeweils in Abhängigkeit von Schadstoffart und Bodenbeschaffenheit) von definierter Spannung und Stromstärke angelegt wird. Dieses Feld bewirkte z.B. innerhalb von 35 Tagen bei einer angelegten Spannung von 61 V und 100 A eine Reduzierung des Phenolindexes von z.B. 1,05 mg/kg Boden auf 0,07 mg/kg Boden, der Mineralölkohlenwasserstoffe von 4.600 mg/kg Boden auf 40 mg/kg Boden, der BTX-Aromaten von 3.584 mg/kg Boden auf 62,1 mg/kg Boden, der Polycyclischen Aromaten (nach der EPA-Liste) von 40,8 mg/kg Boden auf 16,2 mg/kg Boden und der Organohalogene (gemessen als extrahierbare Organohalogene) von 28 mg/kg Boden auf unter die Nachweisgrenze der eingesetzten Analytik. In anderen Feldversuchen gelang es, innerhalb von 35 Tagen z.B. die Belastung des Bodens mit Phenolen von 289 mg/kg Boden auf 0,24 mg/kg Boden abzusenken. Im erstgenannten Versuch wurden über den Gaspfad innerhalb von 35 Tagen ausgetragen: 224,2 kg vorwiegend Benzole und Xylole, 2.246,2 kg Kohlenstoffdioxid, 5,0 kg Oktan, 3,6 kg Butan und Propan, ausgedrückt als Propan sowie 0,8 kg nitrose Gase. Bei der Zerlegung der Schadstoffe im Boden wird die Bindungsenthalpie frei, die zu folgenden Netto-Temperaturerhöhungen führten (bezogen auf 61 V und 100 A): Grundwassertemperatur: 3°C (anfangs 7,1°C, absinkend auf 0,9°C); Bodentemperatur in der wasserungesättigten Zone: 25,0°C, relativ gleichbleibend über die Versuchsdauer.

Um die Zerlegung (Zerstörung) der Schadstoffe im Boden herbeizuführen, sind vier Bedingungen zu schaffen. Zum Aufbau des für die Zerstörung der Schadstoffe an Ort und Stelle erforderlichen elektrischen Feldes muß die Leitfähigkeit des Bodens durch Ionisierung sowohl des Aquifer als auch des Non-Aquifer erhöht werden, beispielsweise von ursprünglich >0,5 MΩ/cm auf 1,2 mΩ/cm. Hierzu wird je nach dem Abstand der Elektroden eine hohe Spannung, beispielsweise in der Größenordnung von 1 kV bis 90 kV, an die Elektroden angelegt. Hierzu genügt es, daß der Bodenbereich eine Restfeuchtigkeit von 5% aufweist. Es ist angezeigt, in jenen Fällen, in denen sich die Ionisierung aufgrund der trockenen Bodenverhältnisse nicht oder nur langsam aufbaut, den Boden künstlich zu befeuchten und gegebenenfalls auch feucht zu halten. Um einen optimalen Stromfluß zu erzielen, sollte die Oberfläche der Elektroden möglichst groß gewählt werden. In den Versuchsanordnungen wurden Stahlpegelrohre mit einer Nennweite von 2 Zoll bis 6 Zoll (125 mm) eingesetzt. Schließlich sind die Parameter des eingesetzten Stromes so zu bemessen, daß diese über der Elektronenaffinität der die Schadstoffe aufbauenden Molekülgruppen (Radikale) bzw. Atome liegen.

Bei der Ausführung des erfindungsgemäßen Verfahrens wird regelmäßig in zwei Schritten vorgegangen. Bei zu sanierenden Flächen bis zu etwa 100 m² genügt eine Zwei-Elektrodenanordnung, d.h. zwei meist als Stahlpegel ausgerüstete Elektroden werden in Tiefen bis unter den Schadstoffherd niedergebracht. Bei größeren Flächen (>100 m²) empfiehlt sich eine Mehrfach-Elektrodenanordnung, die auf geeignete Weise, vorzugsweise in einem bestimmten Rastermaß (z.B. 6 x 8 m, in anderen Fällen bis zu 10 x 10 m und mehr) oder polygonal angelegt werden. Zunächst wird der zwischen zwei Elektroden gelegene, zu reinigende Bodenbereich durch Anlegen einer hohen Spannung ionisiert. Dieser stellte sich in den vorgenannten Versuchsanordnungen nach weniger als 0, 5 sec bei 1000 V und 3,3 A und einem Elektrodenabstand von z.B. etwa 8,1 m ein. Bei einer Mehrfach-Elektrodenanordnung kann die Ionisierung des Bodens an einer zweckmäßigerweise zentral im Feld gelegenen Elektrodenanordnung, bestehend aus einer Anode und einer Kathode, gegebenenfalls aber auch an mehreren im Feld ausgewählten Elektrodenpaaren, aber nicht an allen, vorgenommen werden. Bei Behältern empfiehlt es sich, Platten- und/oder Gitterelektroden einzusetzen. Bei beispielsweise Stahlcontainern kann z.B. der Behälter als solcher als eine Elektrode verwandt werden, während die Gegenelektrode z.B. mittig als Plattenelektrode im Behälter angeordnet wird.

Nach Ionisierung des Bodens wird auf die Arbeitsspannung umgeschaltet. Vorzugsweise erfolgt die Einregelung der Spannung über die Stromstärke, da diese ein Indikator für den Elektronenfluß im Erdbodenbereich ist. Das Einregeln erfolgt in Abhängigkeit von der Art der vor Ort zu zerstörenden Schadstoffe und der Elektronenaffinität der die Schadstoffe aufbauenden Atome bzw. Radikale. Beispielsweise muß die Stromstärke bei Benzolen sehr viel höher eingestellt werden als bei Polycyclischen Verbindungen, bei letzteren wiederum höher als bei Organohalogenen, bei letzteren wiederum höher als bei Phenolen und bei Nitro- und Nitrosoverbindungen wiederum niedriger als bei Phenolen. Die Schadstoffe dürften durch die aufgebrachte Energie durch Abtrennung des (der) Radikals(e) sowie der nachfolgenden Oxidation der Kerne bzw. Ketten durch Elektronenentzug (= anodische Oxidation) oder Elektrodenzufuhr (= kathodische Reduktion) zerstört werden. Bei der anodischen Oxidation unterstützt die Elektrolyse des Wassers durch den dadurch entstehenden (naszierenden) Sauerstoff die Oxidation der Schadstoffe bzw. diese werden z.B. kathodisch hydratisiert.

Beispielsweise entsteht durch Oxidation von Kohlenstoff Kohlenstoffdioxid und in geringsten Mengen Kohlenstoffmonoxid. Wasserstoff oxidiert zu Wasser. Abgespaltenes Chlor reagiert zu Chloriden, während Stickstoffradikale als Stickoxide (NOₓ) freigesetzt werden. Abgespaltener Schwefel formt sich zu kolloidalem Schwefel um und wird damit reaktionsträge.

Da die Abbau- und Oxidationsprodukte weitestgehend als Gase anfallen, wird (werden) zweckmäßigerweise und entsprechend dem Stand der Technik der (die) Anodenpegel und/oder der (die) Kathodenpegel mit einer Luftabsauganlage zur Entfernung der gasförmigen Stoffe aus dem Boden und/oder einer Grundwasserreinigungsanlage nach dem Stand der Technik ausgerüstet.

Bei der Zerstörung der Schadstoffe im elektrischen Feld vor Ort findet also allgemein gesagt eine Zerlegung der Schadstoffe in ihre Grundsubstanzen statt, die dann nach komplizierten Prozessen weiter umgesetzt werden.

Im Unterschied zur bekannten Elektrophorese und zur elektroosmotischen Schadstoffbeseitigung werden die Schadstoffe bei Ausübung des vorliegenden Verfahren nicht bewegt. Dies bedeutet, daß eine Mobilisierung der Schadstoffe nicht stattfindet. Von entscheidender Bedeutung für die Ausübung der vorliegenden Erfindung zur Zerstörung von Schadstoffen im Erdbodenbereich vor Ort ist es, daß die Stromstärke bzw. das Feld ausreichend groß gewählt wird, um die erforderliche Dissoziations- oder Atomisierungsenergie, die zur Zerstörung der Schadstoffe vor Ort erforderlich ist, aufzubringen.

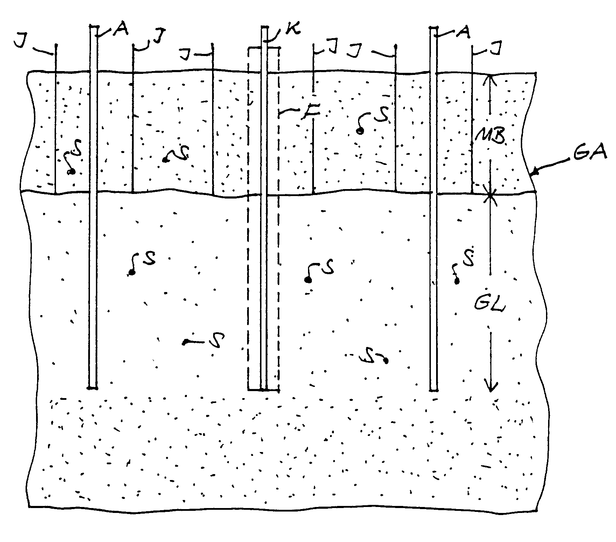

In der Figur ist der Erdbodenbereich mit GA bezeichnet. Er weist in einem tieferliegenden Bereich einen Grundwasserleiter GL auf, der wie die darüberliegende Bodenzone bis zur Geländeroberkante GOK mit Schadstoffen belastet sei. Der über dem Grundwasserleiter GL liegende, ungesättigte Bodenbereich (Non-Aquiferbereich) ist mit UB bezeichnet.

In den Erdbodenbereich GA ist eine Elektrode K abgetäuft, die sich im Beispiel durch den Grundwasserleiter GL und durch den ungesättigten Bodenbereich UB erstreckt.

In einiger Entfernung von der Elektrode K, die selbst Teil einer Elektrodenreihe oder Teil einer polygonalen Elektrodenanordnung sein kann, beispielsweise in einem Abstand von 6 - 12 m sind im Erdbodenbereich GA weitere Elektroden A entweder einzeln (Zwei-Elektrodenanordnung) oder mehrfach in Reihen oder Polygonalen Anordnungen verteilt, die im Beispiel als Anoden dienen. Durch Anlegen einer Spannung zwischen den Elektroden A und K wird im Grundwasserleiter GL und im Bereich UB ein radial auf die Kathode K gerichtetes Feld E erzeugt. Dieses Feld muß, wie oben ausgeführt, nach Erzeugung des Ionisierungskanales so stark sein, daß sich ein Stromfluß ergibt, durch den für die Schadstoffe S im Grundwasserleiter GL und im ungesättigten Bereich UB die Dissoziations- und/oder Atomisierungsenergie aufgebracht wird.

Wenn im ungesättigten Bodenbereich UB wegen der normalerweise geringen Wasserhaltung kein Stromfluß erzeugt werden kann, sollte der ungesättigte Bodenbereich UB auf geeignete Weise, z.B. durch Berieseln oder durch Einbringen von Wasser in einem oder beiden Pegeln eines Elektrodenpaares bewässert bzw. befeuchtet werden und gegebenenfalls feucht gehalten werden. Letzteres kann beispielsweise dadurch erfolgen, daß die Pegelrohre der Elektroden A, K als sogenannte Brunnenfilterrohre ausgebildet sind, in die Wasser eingebracht wird. Weiterhin können zur Wassereinbringung auch separate Injektionslanzen I nach dem Stand der Technik vorgesehen sein, die in den ungesättigten Bodenbereich UB eingebracht werden.

Um eine selektive Schadstoffzerstörung in Teilbereichen des Bodenbereiches GA zu erzielen, können die Elektroden A, K teilweise isoliert sein, so daß ein Feld nur in den gewünschten Teilbereichen erzeugt wird.

Als konkrete Beispiele für nach dem vorliegenden Verfahren zerstörbare Schadstoffe werden u.a. genannt: Benzole, Toluole, Xylole, Nitroverbindungen wie Nitro-, Dinitro- und Trinitrotoulole, Nitrosoverbindungen wie Nitrosophenazon, Phenole und deren Verbindungen unter Einschluß von Derivaten wie Kresolen, aromatische Amine, aromtaische Verbindungen wie Salicylsäure oder Anilin, polycyclische Aromaten (PAK), cyclische Verbindungen wie z.B. N-Methyl-2-pyrrolidon, aliphatische Verbindungen, wie z.B. Penta- oder Heptacosan, Mineralölkohlenwasserstoffe, Organohalogene, Cyanverbindungen, aber auch Pharmarohstoffe, Kampfstoffe wie z.B. Lost, Phosgen und Tabun sowie Organohalogene, Pestizide usw.. Durch elektrochemische Oxidation werden ferner wasserunlösliche Verbindungen wie z.B. bestimmte Chrom-, Blei- oder Quecksilberverbindungen aufgespalten und die Spaltprodukte zum größten Teil in Kolloidform transportierbar.

Die Elektroden A, K können als Massivstabelektroden oder Hohlelektroden in der Form von Voll- oder Filterröhren ausgebildet sein. Die Elektroden A, K können, wie dies in der Figur im Zusammenahng mit der Elektrode K dargestellt ist, in einem Brunnen angeordnet sein, der durch ein sogenanntes Filterrohr F gebildet ist, das vorzugsweise aus Kunststoff besteht. Die Elektroden können auch als Gitter- oder Plattenelektroden ausgebildet sein.

## Patentansprüche

1. Verfahren zur Beseitigung von Schadstoffen (S) vor Ort im Erdbodenbereich (GA), wobei an, in dem Erdbodenbereich (GA) angeordnete Elektroden (A, K) eine elektrische Spannung angelegt wird, dadurch gekennzeichnet, daß in einem ersten Schritt im Erdbodenbereich (GA) zwischen den Elektroden (A, K) durch Anlegen der Spannung ein Ionisierungskanal erzeugt und in einem zweiten Schritt die Arbeitsspannung durch Einstellen der Stromstärke in Abhängigkeit von der Art der zu zerstörenden Schadstoffe eingeregelt wird, wobei die aufgebrachte Energie gleich oder größer als die Elektronenaffinität der die Schadstoffe aufbauenden Atome bzw. Radikale ist.

2. Verfahren nach Anspruch 1, dadurch gekennzeichnet, daß zur selektiven Schadstoffzerstörung in vorgegebenen Bereichen des Erdbodenbereiches (GA) Elektroden (A, K) verwendet werden, die teilweise isoliert sind.

3. Verfahren nach Anspruch 1 oder 2, dadurch gekennzeichnet, daß der Erdbodenbereich (GA) zur Erhöhung der Feuchtigkeit vor Ausbildung des Feldes künstlich bewässert wird.

4. Verfahren nach Anspruch 3, dadurch gekennzeichnet, daß Wasser über in den Erdbodenbereich eingebrachte Injektionslanzen (I) zugeführt wird.

5. Verfahren nach Anspruch 3, dadurch gekennzeichnet, daß Wasser über Elektroden (A,K) in den Erdbodenbereich (GA) eingeführt wird, die hohl und wasserdurchlässig ausgebildet sind.

6. Verfahren nach Anspruch 3, dadurch gekennzeichnet, daß Wasser über Elektrodenanordnungen in den Erdbodenbereich (GA) eingebracht wird, die massiv ausgebildete und von Filterrohren (F), in die Wasser eingebracht wird, umgebene Elektroden (A, K) umfassen.

7. Verfahren nach einem der Ansprüche 1 bis 6, dadurch gekennzeichnet, daß die Schadstoffe (S) feste, ölige oder flüssige Stoffe sind.

8. Verfahren nach Anspruch 7, dadurch gekennzeichnet, daß die Schadstoffe (S) nicht ionisierbare oder unpolare Stoffe sind.

9. Verfahren nach einem der Ansprüche 1 bis 8, dadurch gekennzeichnet, daß der Strom ein Gleichstrom, Wechselstrom, frequenzmodulierter Wechselstrom oder ein pulsierender Strom ist, wobei die Auswahl der Stromart in Abhängigkeit von der Schadstoffart erfolgt.

10. Verfahren nach einem der Ansprüche 1 bis 9, dadurch gekennzeichnet, daß die bei der Schadstoffbeseitigung entstehenden gasförmigen Zerlegungsprodukte an den Elektroden abgesaugt werden.

11. Verfahren nach einem der Ansprüche 1 bis 10, dadurch gekennzeichnet, daß die Schadstoffe (5) durch Elektronenreaktionen oxidiert werden.

12. Verfahren nach einem der Ansprüche 1 bis 11, dadurch gekennzeichnet, daß die Schadstoffe (5) in einem Bodenaushub oder in Schlämmen enthalten sind, der bzw. die den Erdbodenbereich bilden und der bzw. die in einen Behälter eingebracht werden und daß die Elektroden (A, K) in dem Behälter angeordnet werden.

13. Verfahren nach Anspruch 12, dadurch gekennzeichnet, daß die Elektroden (A, K) als Platten- oder Filterelektroden einander gegenüberliegend angeordnet werden.

14. Verfahren nach Anspruch 12, dadurch gekennzeichnet, daß als Hohlelektroden ausgebildete Elektroden (A, K) in dem Behälter angeordnet werden.

15. Verfahren nach Anspruch 12, dadurch gekennzeichnet, daß die elektrisch leitende Wand des Behälters als eine Elektrode verwendet wird.

16. Verfahren nach einem der Ansprüche 1 bis 11, dadurch gekennzeichnet, daß in dem Erdbodenbereich Elektroden (A, K) angeordnet werden, die die Form von Massivstab-Elektroden, Hohlelektroden in Form von Voll- oder Filterrohren oder Gitter- oder Plattenelektroden aufweisen.

17. Verfahren nach Anspruch 16, dadurch gekennzeichnet, daß die Elektroden (A, K) jeweils in einen mit Kunststoff-Filterrohren ausgekleideten Brunnen eingebracht werden.

18. Verfahren nach einem der Ansprüche 1 bis 11, dadurch gekennzeichnet, daß die Elektroden (A, K) als Mehrfachelektrodenanordnung rasterförmig oder polygonal im Erdbodenbereich angeordnet werden.

## Claims

1. A process for the removal of contaminants (S) at the site in the ground region (GA), wherein an electrical voltage is applied to electrodes (A, K) disposed in the ground region (GA),
**characterised in that** in a first step in the ground region (GA) an ionisation channel is produced between the electrodes (A, K) by applying the voltage and in a second step the working voltage is regulated by adjusting the current intensity in dependence on the type of contaminants to be destroyed, wherein the applied energy is equal to or greater than the electron affinity of the atoms or radical constituting the contaminants.

2. A process according to Claim 1,
**characterised in that** electrodes (A, K) which are partially insulated are used for the selective destruction of contaminants in predetermined regions of the ground region (GA).

3. A process according to Claim 1 or 2,
**characterised in that** the ground region (GA) is artificially irrigated to increase the moisture before the formation of the field.

4. A process according to Claim 3,
**characterised in that** water is supplied via injection lances (I) introduced into the ground region.

5. A process according to Claim 3,
**characterised in that** water is introduced into the ground region (GA) via electrodes (A, K), which have a construction which is hollow and impermeable to water.

6. A process according to Claim 3,
**characterised in that** water is introduced into the ground region (GA) via electrode arrangements, which comprise electrodes (A, K) having a sturdy construction and are surrounded by filter pipes (F), into which water is introduced.

7. A process according to one of Claims 1 to 6,
**characterised in that** the contaminants (S) are solid, oily or liquid substances.

8. A process according to Claim 7,
**characterised in that** the contaminants (S) are non-ionisable or covalent substances.

9. A process according to one of Claims 1 to 8,
**characterised in that** the current is a direct current, alternating current, frequency-modulated alternating current or a pulsating current, with the choice of current type being made in dependence on the type of contaminant.

10. A process according to one of Claims 1 to 9,
**characterised in that** the gaseous decomposition products produced on the removal of contaminants are sucked off at the electrodes.

11. A process according to one of Claims 1 to 10,
**characterised in that** the contaminants (S) are oxidised by electron reactions.

12. A process according to one of Claims 1 to 11,
**characterised in that** the contaminants (S) are contained in an excavated ditch or in sludge, which form/forms the ground region and which is/are introduced into a container, **and in that** the electrodes (A, K) are disposed in the container.

13. A process according to Claim 12,
**characterised in that** the electrodes (A, K) are disposed opposite one another as plate or filter electrodes.

14. A process according to Claim 12,
**characterised in that** electrodes (A, K) constructed as hollow electrodes are disposed in the container.

15. A process according to Claim 12,
**characterised in that** the electrically conductive wall of the container is used as an electrode.

16. A process according to one of Claims 1 to 11,
**characterised in that** disposed in the ground region are electrodes (A, K), which have the form of sturdy stick electrodes, hollow electrodes in the form of solid or filter pipes or lattice or plate electrodes.

17. A process according to Claim 16,
**characterised in that** the electrodes (A, K) are in each case introduced into a well lined with plastics filter pipes.

18. A process according to one of Claims 1 to 11,
**characterised in that** the electrodes (A, K) are disposed as a multiple electrode arrangement in a grid or polygonal shape in the ground region.

## Revendications

1. Procédé d'élimination de polluants (S) *in situ* dans le sol (GA) consistant à appliquer à des électrodes (A, K) disposées dans le sol (GA) une tension électrique, caractérisé en ce que dans un premier temps, un canal d'ionisation est créé dans le sol (GA) entre les électrodes (A, K) par application de la tension et en ce que l'on règle, dans un deuxième temps, la tension de travail par ajustement de l'intensité du courant, en fonction du type de polluant à détruire, l'énergie fournie étant identique ou supérieure à l'affinité électronique des atomes ou radicaux formant les polluants.

2. Procédé selon la revendication 1, caractérisé en ce que l'on utilise pour la destruction sélective de polluants dans des zones du sol déterminées (GA) des électrodes (A, K) qui sont partiellement isolées.

3. Procédé selon la revendication 1 ou 2, caractérisé en ce que l'on irrigue le sol, avant l'application du champ électrique, afin d'augmenter son taux d'humidité.

4. Procédé selon la revendication 3, caractérisé en ce que l'eau est amenée par des lances d'injection (I) installées dans le sol.

5. Procédé selon la revendication 3, caractérisé en ce que l'eau est amenée dans le sol (GA) par des électrodes (A, K) qui sont creuses et perméables à l'eau.

6. Procédé selon la revendication 3, caractérisé en ce que l'eau est amenée dans le sol (GA) par des systèmes d'électrodes constitués d'électrodes (A, K) pleines entourées de tuyaux-filtres (F) dans lesquels arrive de l'eau.

7. Procédé selon l'une des revendications 1 à 6, caractérisé en ce que les polluants (S) sont des substances solides, huileuses ou liquides.

8. Procédé selon la revendication 7, caractérisé en ce que les polluants (S) sont des substances apolaires ou non ionisables.

9. Procédé selon l'une quelconque des revendications 1 à 8, caractérisé en ce que le courant est un courant continu, un courant alternatif un courant alternatif modulé en fréquence ou un courant pulsé, le choix du type de courant dépendant de la nature du polluant.

10. Procédé selon l'une des revendications 1 à 9, caractérisé en ce que les produits de dégradation gazeux formés lors de l'élimination des polluants sont aspirés au niveau des électrodes.

11. Procédé selon l'une des revendications 1 à 10, caractérisé en ce que les polluants (S) sont oxydés grâce à des réactions mettant en jeu des électrons.

12. Procédé selon une quelconque des revendications 1 à 11, caractérisé en ce que les polluants (S) sont présents dans des matériaux de déblai ou des boues formant le sol que l'on introduit dans un récipient, et en ce que les électrodes (A, K) sont installées dans ce récipient.

13. Procédé selon la revendication 12, caractérisé en ce que les électrodes (A, K), qui se présentent sous forme de plaques ou de filtres, sont disposées l'une en face de l'autre.

14. Procédé selon la revendication 12, caractérisé en ce que l'on installe dans le récipient des électrodes (A, K) qui se présentent sous forme d'électrodes creuses.

15. Procédé selon la revendication 12, caractérisé en ce que l'on utilise comme une des électrodes la paroi électroconductrice du récipient.

16. Procédé selon l'une des revendications 1 à 11, caractérisé en ce que l'on installe dans le sol des électrodes (A, K) qui se présentent sous forme de barreaux massifs, d'électrodes creuses perforées ou non perforées ou sous forme de grilles ou de plaques.

17. Procédé selon la revendication 16, caractérisé en ce que les électrodes (A, K) sont installées chacune dans un puits revêtu de tuyaux-filtres en matière plastique.

18. Procédé selon l'une des revendications 1 à 11, caractérisé en ce que les électrodes (A, K) sont disposées dans le sol sous forme de systèmes d'électrodes multiples en réseaux ou en polygones.
